# EUROPEAN PATENT SPECIFICATION

(11) **EP 2 240 253 B1**
(45) Date of publication and mention of the grant of the patent: **16.09.2015**
(21) Application number: 08856919.9
(22) Date of filing: 05.12.2008
(51) Int. Cl.: B01D 39/04

(54) **BIODIESEL PURIFICATION METHOD AND APPARATUS**
BIODIESELREINIGUNGSVERFAHREN UND -VORRICHTUNG
PROCÉDÉ ET APPAREIL DE PURIFICATION DE BIO DIESEL

(30) Priority: 07.12.2007 GB 0724049; 19.04.2008 GB 0807198; 27.08.2008 GB 0815538
(43) Date of publication of application: 20.10.2010
(73) Proprietor: Broadsword Biofuelds Limited, Crosshills BD20 7BW (GB)
(72) Inventor: FILLINGHAM, Anthony, John, Crosshills BD20 7BW (GB); RUSHWORTH, Mark, Simon, Crosshills BD20 7BW (GB)
(74) Representative: Wood, Graham
(86) International application number: PCT/GB2008/004008
(87) International publication number: WO 2009/071893

(56) References cited:
- DE-A1- 10 158 899
- GB-A- 580 834
- JP-A- 2000 281 445
- US-A- 2 079 807
- US-A- 4 661 255

## Description

This invention relates to a method and apparatus for the processing and/or purification of biodiesel.

The production of bio-diesel from a range of plants, such as feedstocks, and/or animal oils is well known. Essentially any plant and/or animal oils and fats which contain triglycerides can be trans-esterified with an alcohol to produce fatty acid esters. The fatty acid esters can be burnt as alternatives to, or in combination with, conventional hydrocarbon diesel derived from fossil fuel sources. To produce bio-diesel, plant and/or animal oil is mixed with methanol and/or ethanol in the presence of an acid or base. Typically, bases such as sodium hydroxide or potassium hydroxide are used.

A particular problem is that once the bio-diesel has been produced it must be separated from any unreacted reagents and by-products. If the bio-diesel is not separated from the impurities those compounds may damage the engine in which the bio-diesel is used and/or may reduce the performance of said bio-diesel and/or the engines which use the same. The compounds which have to be removed from the bio-diesel can include water, glycerine, soaps, bases/acids and any unreacted alcohols. There are several methods currently used to remove the impurities listed above.

The first method, and currently the most widely used, is to wash the bio-diesel mixture with water. This removes the water soluble impurities from the bio-diesel which eventually settle out into an aqueous layer below the less dense bio-diesel layer. The aqueous layer is then removed and the bio-diesel re-washed. Several washes are typically required which can be very time consuming, particularly when this includes the time required for the wash mixture to settle. In addition, the base can be neutralised by the addition of an acid and washed out with the water washes.

A second method is commonly called the 'dry-wash' technique. This involves adding, or passing the bio-diesel mixture through diatomaceous earth. This removes some of the impurities, but diatomaceous earth is expensive and it is also a time consuming way of purifying the bio-diesel. In addition to this the diatomaceous earth can compact to form a cake. This raises the pressures involved in purifying the bio-diesel and can prevent the bio-diesel passing through a diatomaceous earth filter altogether.

A third method, which is similar to the second, is to add or pass the bio-diesel mixture through an ion exchange resin. This technique is also time consuming and even more expensive than the diatomaceous earth method.

The document GB 580 834 A describes the filtration of liquid fuel with a filtration media comprising wood.

It is therefore an aim of the present invention to overcome the problems above and to provide a method and means for purifying a fluid such as bio-diesel.

In the first aspect of the invention there is provided a method of removing at least a portion of at least one component from biodiesel said method comprising the steps of exposing the fluid to a media, said media including any one or any combination of wood shavings, wood turnings and/or wood chips. In one embodiment the components which are removed are one or more impurities which are present in the liquid fuel.

Typically the separated components are retained in the media which filters the same from the biodiesel as it is passed through the media.

The wood fragments are any one or any combination of wood shavings, wood turnings and/or wood chips. Preferably the wood fragments are oak wood fragments.

Typically the impurities include, but are not limited to, glycerine, monoglycerides, diglycerides, sodium and/or potassium soaps and water soluble impurities such as sodium hydroxide, potassium hydroxide, methanol, and ethanol.

The impurities typically originate from the trans-esterifation reaction of an oil/fat with one or more alcohols, and are usually unreacted reagents and/or free fatty acids which may or may not have been saponified

In one embodiment the fragments of wood originate from any acidic variety of wood. Typically the fragments of wood originate from any hygroscopic variety of wood.

In one embodiment the fragments of plant material originate from species which contains tannic acid.

In one embodiment of the invention the media contains one or more fragments of plant material and at least one other component. Typically said component is diatomaceous earth.

In one embodiment the diatomaceous earth component includes silica and/or sodium and/or magnesium and/or iron. Typically the diatomaceous earth contains magnesium silicate (MgSi). Preferably the diatomaceous earth is substantially magnesium silicate (MgSi).

In one embodiment the fragments of wood are mixed with the diatomaceous earth to form a mixture. Typically the fragments of wood prevent the diatomaceous earth form caking. Preferably the wood fragment and diatomaceous earth media performs the function of removing one or more components from the liquid fuel.

Typically the diatomaceous earth substantially removes the alcohol based impurities such as methanol.

In one embodiment the component is one or more molecular sieves. Typically the molecular sieves are a substantially porous material. Preferably the pores and/or cavities are of a substantially uniform size and/or shape.

In one embodiment the pore and/or cavity size is substantially 4 Å in diameter.

The molecular sieve can be constructed from any suitable substantially porous material but preferably takes the form of metallic aluminosilicate beads.

Typically the molecular sieves remove one or more components from the liquid fuel. Typically the molecular sieves trap appropriately sized components in the pores and/or cavities. Typically the components are molecules and further typically the molecules are water molecules.

In one embodiment the media includes diatomaceous earth and/or a plurality of molecular sieves.

In another aspect or the invention there is provided an apparatus according to claim 9.

The filter media is contained between one or more plates with apertures therein. This allows different types of filter media to be separated and/or varying amounts of filter media to be used in said vessel. Typically, larger fragments of wood are contained at the bottom of the vessel with smaller fragments above, said plates partitioning the different sizes and/or types of wood and/or diatomaceous earth and/or molecular sieves.

In one embodiment the biodiesel is pumped through an aperture into the bottom of the vessel, and subsequently in a substantially upward direction through the filter media and out through an aperture at the top of the vessel with the removed impurities retained in the filter media.

In one embodiment a portion of the vessel is detachably attached to allow the insertion and/or removal of the filter media.

In one embodiment the vessel is operated to produce batches of purified biodiesel.

In one embodiment the vessel is operated continuously or semi-continuously to purify the biodiesel.

Typically the vessel is constructed from stainless steel and/or plastics material.

Specific embodiments of the invention are now described with reference to the following figures wherein:
Figure 1 shows a sample of bio-diesel which has been allowed to settle for 24 hours after production;
Figure 2 shows a typical reactor for producing bio-diesel.
Figure 3 shows a sample of bio-diesel which has undergone a wash test with water;
Figure 4 shows a sample of bio-diesel, purified in accordance with an aspect of the invention, which has undergone a wash test after being purified;
Figure 5a is a diagram of the apparatus used to purify the bio-diesel samples, in accordance with one aspect of the invention; and
Figure 5b is a similar diagram showing the partitioning of the apparatus, in accordance with an embodiment of the invention.

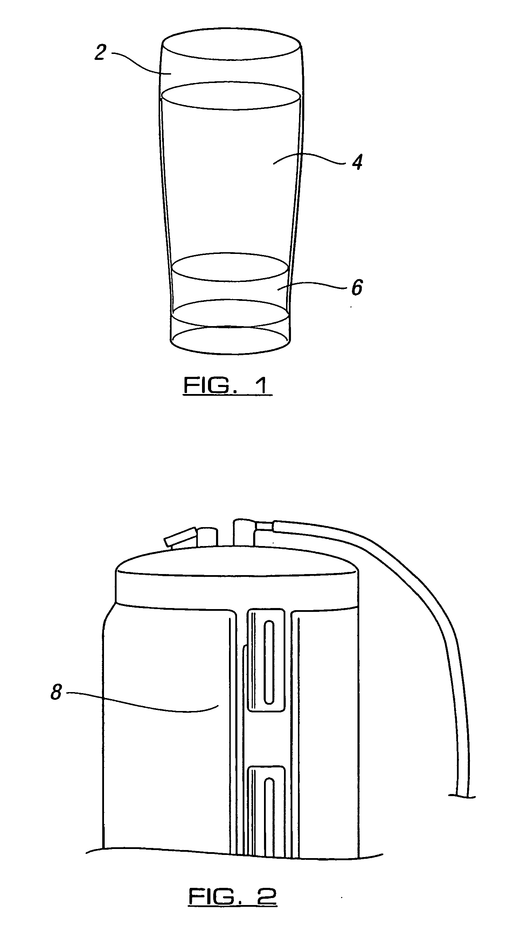

Turning firstly to Figure 1, there is a glass container 2, which contains the raw product from the transesterification reaction which produces 'raw' bio-diesel. The sample has been left to settle for 24 hours; in which time it has settled out into two distinct layers. The top layer 4 is substantially 'raw' unpurified bio-diesel which contains a high proportion of surfactants and unreacted reagents. The bottom layer 6 is substantially glycerine, a by-product of the trans-esterification reaction of triglyceride fats, as well as mono or diglyceride fats and free fatty acids. The glycerine can be removed and, typically with further purification, used in other applications such as foods and consumer products. The 'raw' bio-diesel then needs to be purified further before use.

Figure 2 shows an example of the type of reactor 8 in which the trans-esterification reaction is conducted to produce the raw-bio-diesel and glycerine. Typically, vegetable oil and/or animal fat/oil is mixed with an alcohol (usually methanol) in the presence of an acid or a base. A base is often used and is commonly sodium hydroxide or potassium hydroxide. The required amount of sodium/potassium hydroxide is dissolved in the methanol to produce sodium/potassium methoxide. If ethanol is used sodium/potassium ethoxide is produced.

The reactor 8 shown in Figure 2 is constructed from stainless steel and can be pressurised and/or heated to increase the efficiency of the reaction. Occasionally, if the feed stock is waste vegetable oil it may need to be heated to remove the any water contained therein. Any water contained in the reactants can lead to saponification of the oil/fat rather than transesterification. This is particularly undesirable as the soaps produced can act as detergents which make it very difficult to separate the bio-diesel from the glycerine and aqueous contaminants.

Once the reaction is over the bio-diesel needs to be purified. As discussed earlier there are several methods of purification, however the most conventional is physically removing the glycerine layer then washing the 'raw' bio-diesel several times with water until the water soluble impurities are washed out. As it usually takes around 24 hours for each wash to settle this can be a very time consuming and laborious process.

The 'wash test' is a standard method of assessing the quality of the bio-diesel fuel produced. The wash test comprises the steps of agitating a sample of bio-diesel with hot water for 1 minute and then leaving to settle over 24 hours. The clearer the water layer the more pure and higher quality the bio-diesel. A cloudy and/or discoloured water layer indicates the bio-diesel contains impurities.

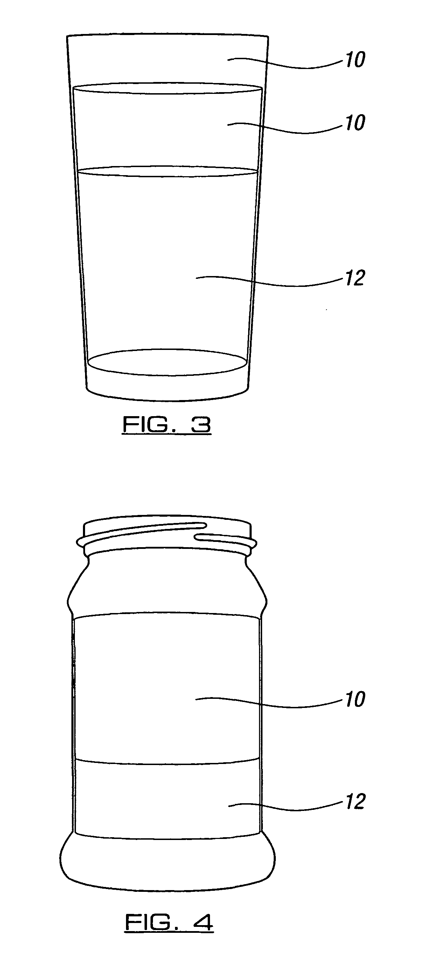

The results from a wash test with 'raw' unwashed bio-diesel can be seen in Figure 3. Figure 3 shows a glass container 10 containing a fluid, the top layer 12 of which is bio-diesel and the bottom layer 12, which contains the impurities washed from the bio-diesel. It can be seen that the bottom aqueous layer 12 is opaque, indicating a significant amount of impurities are present.

Figure 4 shows the results from another wash test conducted on a sample of bio-diesel from the same batch as that tested in Figure 3, but after being filtered through oak shavings in accordance with one embodiment of the invention. It can be seen that both the top bio-diesel layer 10 and the bottom aqueous layer 12 are both clear, indicating that the bio-diesel is of very high purity.

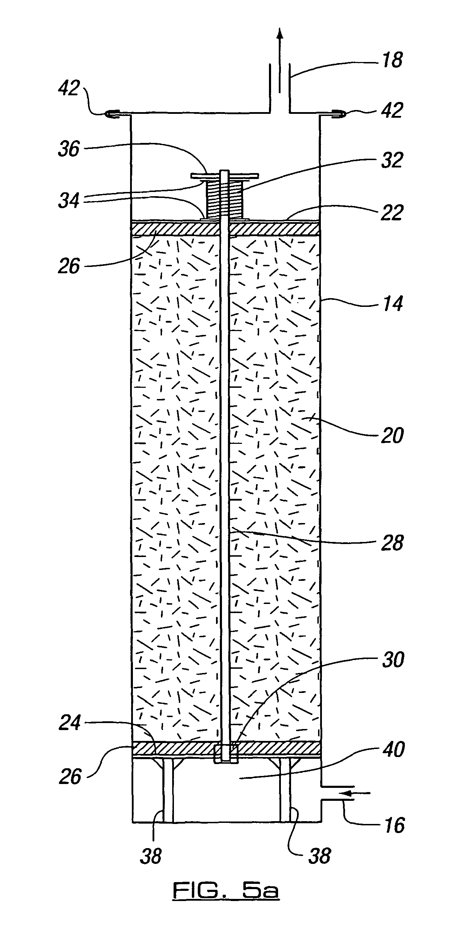

Figure 5a shows the apparatus used in purifying the fluid, in this embodiment bio-diesel, in accordance with one aspect of the invention. The apparatus consists of a housing 14, with an inlet 16 and an outlet 18. The filter media 20 is contained within the housing 14 and between an upper plate 22, and a lower plate 24. Both upper and lower plates 22,24 have apertures formed therein to allow the fluid to flow through. Wadding 26 is inserted to separate the filter media 20 from the plates 22,24, and to prevent fragments of wood being washed through the apertures in the plates along with the fluid. The plates 22,24 are secured at either end of the filter media by a threaded rod 28. The lower plate 24 is secured to the rod with a nut 30, whilst the upper plate 22 is secured with a spring 32 and washer 34 arrangement, the spring is compressed with a wing nut 36. This arrangement contains the filter media between the upper and lower plates 22,24 and ensures that if there is a degree of expansion or contraction of the filter media 20, the upper plate 22 remains in communication with the filter media 20. The lower plate 24 is supported above the bottom of the apparatus by legs 38. The gap between the lower plate 24 and the bottom of the apparatus defines the sump area 40.

In use, the fluid is pumped through inlet 16, into the sump area 40, upwards through the apertures in the lower plate 24, through the wadding 40, and through the filter media 20. By using this upward filtration technique the water and glycerine contained in the bio-diesel remains at the bottom of the apparatus, substantially in and around the sump area 40. By contact and/or filtration through the filter media 20, the bio-diesel is substantially purified from contaminants. The purified bio-diesel is then recovered after flowing through the outlet 18. The filter apparatus can be used to purify fluids as a continuous, semi-continuous or batch process simply by controlling the flow of fluid therethrough.

The inside of the apparatus, to insert or change the filter media, can be accessed by removing the clamp band 42. Once the clamp band 42 has been removed the top of the apparatus can be removed, the wing nut 36 undone to carefully release any load on the spring 32 and the upper plate 22 and wadding 26 removed.

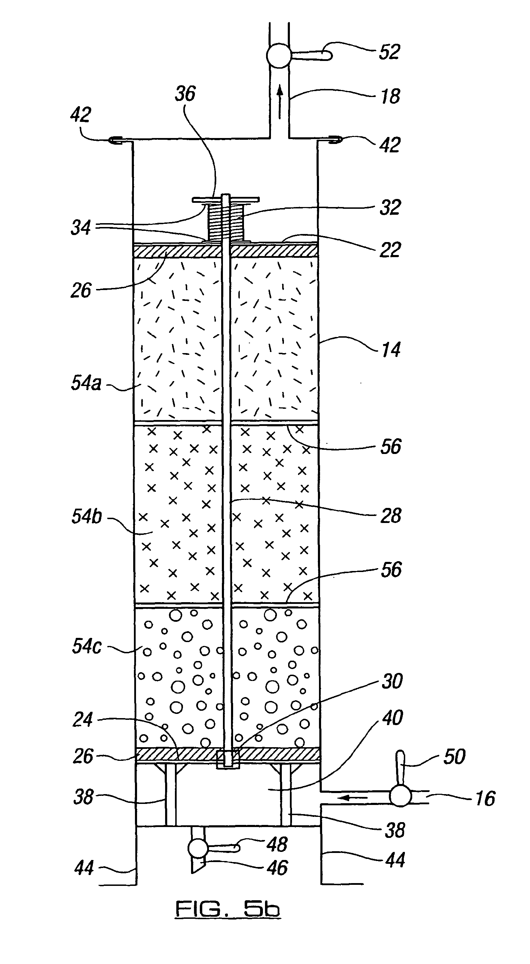

Figure 5b shows an apparatus in accordance with one embodiment of the invention which is similar to that in Figure 5b, wherein the fluid enters the apparatus at inlet 16 and into the sump area 40. This apparatus however, is mounted on legs 44 which raise the apparatus from the ground so that a drain 46 equipped with a valve 48 can be attached to the sump 40. This is an advantage as the glycerine, water and other impurities which collect in and around the sump area 40 can be drained, as well as the apparatus itself. In this embodiment the inlet 16 and outlet 17 are also equipped with valves 50 and 52 respectively. The actuation of said valves allows the apparatus to be easily switched between batch, continuous and/or semi-continuous modes of operation.

Typically the materials used in the construction of the apparatus, for example the o-rings in the valves, are compatible with products and contaminants in the fluid, particularly because bio-diesel is a good solvent and sodium/potassium methoxide is corrosive. Therefore, plastics materials and stainless steel are principally used in the construction of a bio-diesel filter apparatus.

The main difference between this and the previous example is that the filter media has been divided into sections 54a, 54b and 54c by interstitial plates 56, which have apertures to allow the flow of fluid therethrough, but keep the filter media sections 54a-c separate. The advantage of this embodiment is that different types of filter media can be partitioned and/or positioned in a desired sequence. For example the filter media can be ordered by size with larger fragments of wood, such as oak chips, in the lower section 54c, and smaller fragments, such as sawdust, placed in the sections above. In addition, filer media of different species can be placed in the sections. For example oak shavings can be placed in one section and chestnut shavings in another section.

## Claims

1. A method of removing at least a portion of at least one component from biodiesel **characterised in that** said method contains the steps of exposing the biodiesel to a media (20), said media including any one or any combination of wood shavings, wood turnings and/or wood chips.

2. A method according to claim 1 wherein the wood is of the oak variety.

3. A method according to claim 1 wherein the wood is substantially an acidic and/or hygroscopic variety of wood.

4. A method according to claim 1 wherein the wood is derived from a species which contains tannic acid.

5. A method according to claim 1 wherein the media includes diatomaceous earth and/or a plurality of molecular sieves.

6. A method according to claim 1 wherein the one or more components of the bio-diesel are impurities from the production of the same and the media substantially removes at least a portion of said impurities by filtration.

7. A method according to claim 6 wherein the bio-diesel is substantially purified in a batch process.

8. A method according to claim 6 wherein the bio-diesel is substantially purified continuously and/or semi-continuously.

9. Apparatus to remove at least a portion of at least one component from biodiesel fuel wherein said apparatus includes a vessel having an aperture through which the biodiesel fuel can be introduced and an aperture through which the biodiesel is removed, and at least one filter media (20), **characterised in that** said filter media substantially includes any one or any combination of wood shavings, wood turnings and/or wood chips, said media arranged between two plates with apertures therein.

10. An apparatus according to claim 9 wherein larger fragments of wood are contained at the bottom of the vessel with smaller fragments above, said plates partitioning the different sizes and/or types of plant material.

11. An apparatus according to claim 10 wherein the biodiesel fuel is pumped through an aperture into the bottom of the vessel, and subsequently in a substantially upward direction through the filter media.

12. An apparatus according to claim 11 wherein the liquid fuel is pumped through at least one aperture into the bottom of the vessel, and subsequently in a substantially upward direction through the filter media and out through at least one aperture at substantially the top of the vessel.

## Patentansprüche

1. Verfahren zum Entfernen von wenigstens einem Teil wenigstens eines Bestandteils aus Biodiesel, **dadurch gekennzeichnet, dass** das genannte Verfahren die Schritte des Inkontaktbringens des Biodiesels mit einem Medium (20) enthält, wobei das genannte Medium eines oder eine Kombination von Holzspänen, Holzdrehspänen und/oder Holzhackschnitzeln beinhaltet.

2. Verfahren nach Anspruch 1, wobei das Holz von der Art Eiche ist.

3. Verfahren nach Anspruch 1, wobei das Holz im Wesentlichen eine saure und/oder hygroskopische Holzart ist.

4. Verfahren nach Anspruch 1, wobei das Holz von einer Gattung stammt, die Gerbsäure enthält.

5. Verfahren nach Anspruch 1, wobei das Medium Kieselgur und/oder mehrere Molekularsiebe beinhaltet.

6. Verfahren nach Anspruch 1, wobei der eine oder die mehreren Bestandteile des Biodiesels Verunreinigungen aus seiner Produktion sind und das Medium im Wesentlichen wenigstens einen Teil dieser genannten Verunreinigungen durch Filtration entfernt.

7. Verfahren nach Anspruch 6, wobei der Biodiesel im Wesentlichen in einem Batchverfahren gereinigt wird.

8. Verfahren nach Anspruch 6, wobei der Biodiesel im Wesentlichen kontinuierlich und/oder semikontinuierlich gereinigt wird.

9. Vorrichtung zum Entfernen von wenigstens einem Teil wenigstens eines Bestandteils aus Biodieselkraftstoff, wobei die genannte Vorrichtung einen Behälter mit einer Öffnung, durch welche der Biodieselkraftstoff eingeführt werden kann, und einer Öffnung, durch welche der Biodiesel entfernt wird, und wenigstens ein Filtermedium (20) beinhaltet, **dadurch gekennzeichnet, dass** das genannte Filtermedium im Wesentlichen eines oder eine Kombination von Holzspänen, Holzdrehspänen und/oder Holzhackschnitzeln beinhaltet, wobei das genannte Medium zwischen zwei Platten mit Öffnungen in ihnen angeordnet ist.

10. Vorrichtung nach Anspruch 9, wobei größere Holzfragmente im Boden des Behälters mit kleineren Fragmenten darüber enthalten sind, wobei die genannten Platten die verschiedenen Größen und/oder Typen von pflanzlichem Material unterteilen.

11. Vorrichtung nach Anspruch 10, wobei der Biodieselkraftstoff durch eine Öffnung in den Boden des Behälters und anschließend in einer im Wesentlichen aufwärtigen Richtung durch das Filtermedium gepumpt wird.

12. Vorrichtung nach Anspruch 11, wobei der flüssige Kraftstoff durch wenigstens eine Öffnung in den Boden des Behälters und anschließend in einer im Wesentlichen aufwärtigen Richtung durch das Filtermedium und durch wenigstens eine Öffnung im Wesentlichen oben am Behälter hinaus gepumpt wird.

## Revendications

1. Procédé destiné à éliminer au moins une portion d'au moins un composant du biodiesel, **caractérisé en ce que** ledit procédé contient les étapes consistant à exposer le biodiesel à un milieu (20), ledit milieu incluant l'un quelconque ou n'importe quelle combinaison des éléments suivants, à savoir copeaux de bois, tournures de bois et/ou particules de bois.

2. Procédé selon la revendication 1, le bois provenant de la variété chêne.

3. Procédé selon la revendication 1, le bois étant sensiblement une variété de bois acide et/ou hygroscopique.

4. Procédé selon la revendication 1, le bois étant dérivé d'une espèce qui contient de l'acide tannique.

5. Procédé selon la revendication 1, le milieu incluant des terres à diatomées et/ou une pluralité de tamis moléculaires.

6. Procédé selon la revendication 1, lesdits un ou plusieurs composants du biodiesel étant des impuretés provenant de la production de celui-ci, et le milieu éliminant sensiblement au moins une portion desdites impuretés par filtration.

7. Procédé selon la revendication 6, le biodiesel étant sensiblement purifié dans un processus par lots.

8. Procédé selon la revendication 6, le biodiesel étant sensiblement purifié en mode continu et/ou semi-continu.

9. Appareil pour éliminer au moins une portion d'au moins un composant du carburant biodiesel, ledit appareil incluant une cuve avec une ouverture à travers laquelle le carburant biodiesel peut être introduit et une ouverture à travers laquelle le biodiesel est enlevé, et au moins un milieu filtrant (20), **caractérisé en ce que** ledit milieu filtrant inclut sensiblement l'un quelconque ou n'importe quelle combinaison des éléments suivants, à savoir copeaux de bois, tournures de bois et/ou particules de bois, ledit milieu étant agencé entre deux plaques alors que des ouvertures sont ménagées dans celles-ci.

10. Appareil selon la revendication 9, des fragments de bois plus grands étant contenus au fond de la cuve, alors que les fragments plus petits se trouvent au-dessus, lesdites plaques assurant la séparation des différentes tailles et/ou différents types de matières végétales.

11. Appareil selon la revendication 10, le carburant biodiesel étant pompé à travers une ouverture ménagée dans la partie inférieure de la cuve, et ultérieurement suivant un sens sensiblement ascendant à travers le milieu filtrant.

12. Appareil selon la revendication 11, le carburant liquide étant pompé à travers au moins une ouverture ménagée dans la partie inférieure de la cuve, et ultérieurement suivant un sens sensiblement ascendant à travers le milieu filtrant, et évacué à travers au moins une ouverture au niveau de sensiblement la partie supérieure de la cuve.
